# EUROPÄISCHE PATENTSCHRIFT

(11) **EP 3 146 325 B1**
(45) Veröffentlichungstag und Bekanntmachung des Hinweises auf die Patenterteilung: **08.01.2020**
(21) Anmeldenummer: 15719190.9
(22) Anmeldetag: 23.04.2015
(51) Int. Cl.: G01N 29/06, G01S 15/89, G01N 29/11, G01N 29/26, G01N 29/44

(54) **SIMULATIONSGESTÜTZTE DEFEKTBEWERTUNG MIT ULTRASCHALL**
SIMULATION-AIDED ULTRASONIC DEFECT EVALUATION
EVALUATION ULTRASONORE DES DEFAUTS AIDÉE PAR SIMULATION

(30) Priorität: 22.05.2014 DE 102014209773
(43) Veröffentlichungstag der Anmeldung: 29.03.2017
(73) Patentinhaber: Siemens Aktiengesellschaft, 80333 München (DE)
(72) Erfinder: FENDT, Karl, 1119 Wien (AT); MOOSHOFER, Hubert, 81541 München (DE); RUPITSCH, Stefan Johann, 90461 Nürnberg (DE)
(86) Internationale Anmeldenummer: PCT/EP2015/058789
(87) Internationale Veröffentlichungsnummer: WO 2015/176907

(56) Entgegenhaltungen:
- WO-A1-2013/023987
- US-A1- 2014 094 702
- LHEMERY A ET AL: "Modeling tools for ultrasonic inspection of welds", NDT & E INTERNATIONAL, BUTTERWORTH-HEINEMANN, OXFORD, GB, Bd. 33, Nr. 7, 1. Oktober 2000 (2000-10-01), Seiten 499-513, XP004292723, ISSN: 0963-8695, DOI: 10.1016/S0963-8695(00)00021-9
- FAUR M ROY O BENOIST PH OKSMAN J MORISSEAU: "AN INVERSE METHOD FOR CRACKS CHARACTERIZATION FROM ULTRASONIC B-SCAN IMAGES", REVIEW OF PROGRESS IN QUANTITATIVE NONDESTRUCTIVE EVALUATION, AMERICAN INSTITUTE OF PHYSICS, MELVILLE, US, Bd. 16, 1. Januar 1997 (1997-01-01), Seiten 67-74, XP009185066, ISSN: 0743-0760

## Beschreibung

Die Erfindung betrifft ein Verfahren zum Untersuchen eines Bauteils. Hierzu wird eine zerstörungsfreie Inspektion durchgeführt, indem Ultraschall in das Bauteil ausgesendet wird und Signale der Ultraschallechos erfasst werden. Zur Erfindung gehört auch eine Untersuchungsvorrichtung zum Durchführen des erfindungsgemäßen Verfahrens.

In einer zerstörungsfreien Prüfung sicherheitskritischer Bauteile mit Hilfe von Ultraschall ist neben dem Auffinden eines Defekts auch dessen Quantifizierung in Bezug auf mindestens eine Beschaffenheit des Defekts von zentraler Bedeutung. Beispielsweise ist für die bruchmechanische Untersuchung, Überwachung eines Risswachstums und Abschätzung einer Bauteillebensdauer die Kenntnis der Lage, Größe und/oder Form von vorhandenen Defekten erforderlich.

Eine Größenbewertung eines Defekts ist mittels direkter Ultraschallmessung nur möglich, wenn der Defekt bezüglich der Schallbündelbreite und der Wellenlänge des verwendeten Ultraschalls genügend groß ist. Dann kann beispielsweise mittels eines bildgebenden Verfahrens eine Visualisierung des Defekts erzeugt und hieran die Defektgröße bestimmt werden. Bei kleinen Defekten, die kleiner als beispielsweise das Doppelte der Wellenlänge des Ultraschalls sind, sind diese Verfahren nicht mehr anwendbar, da hier die Abbildungseigenschaften des Verfahrens dominieren und keine ausreichend feine räumliche Auflösung möglich ist. Ein beispielhafter Anwendungsfall für die Bewertung kleiner Defekte ist die Prüfung von Rotorkomponenten im Energiemaschinenbau.

Ein zusätzliches Problem ergibt sich, wenn nicht ein einzelner Defekt, sondern mehrere Defekte und damit mehrere Streuzentren oder Streukerne für den Ultraschall im Bauteil vorhanden sind. Wechselwirkungen durch Mehrfachstreuung zwischen benachbarten Defekten führen in der Regel zu Fehlbewertungen. Außerdem führt die Überlagerung von Defektechos benachbarter Inhomogenitäten beziehungsweise die Überlagerung von Defektechos mit Gefügestreuung in der Regel zu fehlerhafter oder ungenauer Bewertung.

In einem wissenschaftlichen Fachartikel von Lhemery et al. ("Modeling tools for ultrasonic inspection of welds", NDT & INTERNATIONAL, BUTTERWORTH-HEINEMANN, OXFORD, GB, Bd. 33, Nr. 7, 1. Oktober 2000, Seiten 499-513, ISSN: 0963-8695, DOI: 10.1016/S0963-8695(00)00021-9) ist ein Verfahren zum Untersuchen von Schweißnähten beschrieben. Mittels einer Ultraschalluntersuchung werden Ultraschalldaten erzeugt, die mittels einer Parametrisierung in Parameter umgewandelt werden. Mittels eines Modells werden korrespondierende Parameter erzeugt, die mögliche Positionen von Schäden in der Schweißnaht beschreiben.

In einem Fachartikel von Faur et al. ("An Inverse Method for Cracks Characterization from Ultrasonic B-Scan Images", Review of Progress in Quantitative Nondestructive Evaluation, American Institute of Physics, Melville, US, Bd. 16, 1. Januar 1997, Seiten 67-74, ISSN: 0743-0760) ist eine iterative inverse Prozedur zum Anpassen eines Modells eines Bauteils an Ultraschallmessdaten bekannt. Für die iterative Optimierung wird aus dem Modell mittels einer Vorprozessierung ein Parametersatz ermittelt, der auch aus den Ultraschallmesswerten extrahiert wird.

Der Erfindung liegt die Aufgabe zugrunde, Strukturelemente, wie z.B. Defekte, in einem Bauteil zu quantifizieren.

Die Aufgabe wird durch die Gegenstände der unabhängigen Patentansprüche 1 und 11 gelöst. Vorteilhafte Weiterbildungen der Erfindung ergeben sich durch die Merkmale der abhängigen Patentansprüche.

Das Problem wird erfindungsgemäß durch folgendes, drei Schritte umfassendes Verfahren gelöst. Auf Messwerte einer Ultraschallinspektion wird ein bildgebendes Rekonstruktionsverfahren angewendet. Dabei kann auf einen vorhandenen Datensatz zurückgegriffen, oder eine neue Ultraschallmessung durchgeführt werden. Unter Ultraschallmessung ist das Aussenden von Ultraschall in das Bauteil und die Erfassung von Ultraschallsignalen durch die Sendeeinheit, oder mindestens eine Empfangseinheit, zu verstehen. Im zweiten Schritt wird aus der Rekonstruktion, also aus den Bilddaten, die Defektanzahl und ungefähre Position extrahiert. Die Positionsangabe kann jeweils eine 1D-Position, eine 2D-Position oder eine 3D-Position beschreiben. Im letzten Schritt wird anhand der extrahierten Informationen ein Inverses Verfahren zur Rekonstruktion der Ultraschallmesswerte angewendet. Die Erfindung bezieht sich dabei nicht nur auf die Defekterkennung, sondern allgemein auf die Untersuchung einer inneren Struktur eines Bauteils.

Die innere Struktur des Bauteils umfasst im Zusammenhang mit der Erfindung mindestens ein Strukturelement. Unter einem Strukturelement ist im Zusammenhang mit der Erfindung allgemein ein Streukern oder Streuzentrum oder eine Reflexionsfläche für den Ultraschall zu verstehen, also eine Inhomogenität im Material des Bauteils. Ein Beispiel für ein inneres Strukturelement ist ein Defekt, wie z.B. ein Haarriss, ein Materialeinschluss oder eine korrodierte Stelle, oder eine Grenzfläche zwischen zwei Komponenten des Bauteils.

Für den Fall, dass ein Strukturelement Abmessungen in der Größenordnung der Wellenlänge des Ultraschalls (insbesondere weniger als das doppelte der Wellenlänge) aufweist, also die maximale Abmessung des Streuelements entsprechend klein ist, ist davon auszugehen, dass in der Rekonstruktion das Strukturelement nicht ausreichend scharf abgebildet ist, um eine Beschaffenheit des Strukturelements zu bestimmen. Daher verlässt man sich bei dem erfindungsgemäßen Verfahren nicht auf diese Rekonstruktion. Stattdessen werden in der Rekonstruktion nur die Anzahl und eine jeweilige Position mindestens eines Strukturelements der inneren Struktur ermittelt. Durch den Verfahrensschritt sind also die Anzahl und die ungefähre Lage von Strukturelementen bekannt.

Nun wird gemäß der jeweiligen Position jedes Strukturelements in einem Simulationsmodell des Bauteils jeweils ein Modell jedes Strukturelements positioniert. Jedes Modell umfasst dabei mindestens einen einstellbaren Modellparameter, der eine Beschaffenheit des jeweiligen Strukturelements beschreibt. Ein sehr einfaches Modell kann beispielsweise das Strukturelement als eine Kreisscheibe beschreiben, wobei als Beschaffenheit beispielsweise ein Durchmesser und/oder eine räumliche Ausrichtung der Kreisscheibe im Bauteil angegeben sein können. Mittels des Simulationsmodells wird bei dem Verfahren die Ultraschallmessung simuliert, das heißt es werden in der Simulation das Aussenden des Ultraschalls, Streuprozesse und der Empfang der Streusignale simuliert. Hierdurch werden Simulationswerte erzeugt. Die Simulationswerte beschreiben diejenigen Ultraschallmesswerte, die sich ergeben müssten, wenn in dem Bauteil tatsächlich Strukturelemente enthalten wären, welche die Beschaffenheit aufweisen, wie sie durch jedes Modell angegeben ist. Beschreibt jedes Modell das jeweilige Strukturelement im Bauteil genau genug, so müssten die Simulationswerte mit den Ultraschallmesswerten übereinstimmen. Um dies zu überprüfen, wird ein Unterschied zwischen den Simulationswerten und den Ultraschallmesswerten ermittelt. In Abhängigkeit des Unterschieds wird dann jeder Modellparameter gemäß einer Optimierungsvorschrift verändert. Diese Optimierungsvorschrift ist dazu ausgelegt, den Unterschied zu verringern. Bevorzugt werden hierzu eine Gradientenabstiegsmethode und/oder eine Gauß-Newton-Methode, insbesondere eine regularisierte Gauß-Newton-Methode, als Optimierungsvorschrift zugrunde gelegt. Zwei weitere geeignete Ansätze sind eine Monte-Carlo-Methode und Parameterstudien. Mit anderen Worten wird also bei Vorhandensein eines Unterschieds in jedem Modell entsprechend der gewählten Optimierungsvorschrift mindestens ein Modellparameter angepasst, sodass hierdurch das Modell die Beschaffenheit des jeweiligen Strukturelements genauer beschreibt.

Durch das erfindungsgemäße Verfahren ergibt sich somit der Vorteil, dass nach dem Verändern der Modellparameter gemäß der Optimierungsvorschrift für jedes Strukturelement ein Modell vorhanden ist, dessen Modellparameter die Beschaffenheit des jeweiligen Strukturelements genauer beschreibt als vor dem Optimierungsschritt.

Bevorzugt werden das Simulieren der Ultraschallmessung und das Verändern jedes Modellparameters iterativ so oft durchgeführt, bis der ermittelte Unterschied ein vorbestimmtes Optimierungskriterium erfüllt. Beispielsweise kann ein Schwellenwert für den Unterschied gesetzt werden und die Anpassung der Modellparameter so lange durchgeführt werden, bis der Unterschied betragsmäßig kleiner als der Schwellenwert ist. Durch Einstellen des Schwellenwerts kann somit die Genauigkeit, mit welcher die einstellbaren Parameter jedes Modells die Beschaffenheit des zugehörigen Strukturelements beschreiben, auf einen gewünschten Genauigkeitsgrad eingestellt werden.

Als ein geeignetes Maß zum Optimieren der Modellparameter hat sich bewährt, zum Ermitteln des Unterschieds das Berechnen einer Quadratsumme von Differenzen zwischen jeweils einem Simulationswert und einem durch diesen nachgebildeten oder beschriebenen oder simulierten Ultraschallmesswert zugrunde zu legen. Die Minimierung der Quadratsumme, das heißt eine Minimum-Mean-Square-Error-Methode, hat im Zusammenhang mit der beschriebenen Optimierung ein zuverlässiges Konvergenzverhalten gezeigt.

In Bezug auf die verwendeten Modelle ist vorgesehen, dass mindestens ein Modell als Modellparameter zumindest einen der folgenden Parameter umfasst: eine Form des modellierten Strukturelements, ein Reflexionsmaß, ein Dämpfungsmaß, eine Ausrichtung oder Orientierung im Bauteil, eine Position im Bauteil. Als Form kann beispielsweise eine einfache geometrisehe Grundform zugrunde gelegt werden, wie beispielsweise die Kugelform oder eine Ellipsoidform oder die Form einer Kreisscheibe. Als Form kann aber auch beispielsweise auf der Grundlage von vorangegangenen Untersuchungen, auch beispielsweise mit anderen Prüfverfahren (z.B. Röntgenprüfung), ein Prototyp für beispielsweise einen bekannten typischen Defekt in dem Bauteil zugrunde gelegt werden, also z.B. einen Haarriss. Die Position des Strukturelements lässt sich ebenfalls mittels des Verfahrens auf der Grundlage des ermittelten Unterschieds korrigieren.

Um die Beschaffenheit eines Strukturelements besonders aufwandsarm zu ermitteln, kann die Wahl eines geeigneten Modells in Abhängigkeit von einer Eigenschaft des Bauteils im Voraus festgelegt werden. Mit anderen Worten wird also der Modelltyp in Abhängigkeit davon ausgewählt, welchen Typ von Strukturelement man in dem Bauteil erwartet. Ist beispielsweise davon auszugehen, dass in dem Bauteil Haarrisse vorhanden sein könnten, so kann ein entsprechendes Defektmodell für einen Haarriss verwendet werden. Insbesondere bei der iterativen Ausführungsform des Verfahrens ist hierdurch die Konvergenz des Verfahrens in vorteilhafter Weise beschleunigt.

Um auf der Grundlage der Ultraschallmesswerte die Anzahl und die Position einzelner Strukturelemente zu ermitteln, wird als Rekonstruktionsmethode eine bildgebende Methode verwendet. Insbesondere haben sich hierzu folgende Methoden und/oder Kombinationen dieser Methoden bewährt: Synthetic Aperture Focusing Technique, Deconvolution Imaging und Total Focusing Method. Algorithmen zum Durchführen dieser Methoden sind im Stand der Technik verfügbar und lassen sich mit geringem Anpassungsaufwand vorteilsbringend in das erfindungsgemäße Verfahren integrieren.

Als Ergebnis der Rekonstruktion erhält man ein Abbild der inneren Struktur des Bauteils, wobei, wie bereits beschrieben, insbesondere Defekte mit einer maximalen Abmessung in Größenordnung der Wellenlänge des Ultraschalls nicht in genügender Abbildungsgenauigkeit abgebildet sind. Um dennoch zuverlässig die Position eines Strukturelements zu ermitteln, kann das Orten eines lokalen Maximums in der Abbildung als Ortungsmethode verwendet werden. Das Orten von lokalen Maxima in Bildern kann mittels einer an sich bekannten Methode zur Bildanalyse durchgeführt werden. Zusätzlich oder alternativ zur Maximumsortung kann auch eine Autokorrelationsmethode zugrunde gelegt werden, wie sie ebenfalls an sich aus dem Stand der Technik bekannt ist.

Um mehrere Modelle von Strukturelementen in einem Simulationsmodell zusammenfassen zu können und hieraus zuverlässige Simulationswerte zu erhalten, hat sich im Zusammenhang mit dem erfindungsgemäßen Verfahren bewährt, dass die Simulation zumindest eine der folgenden Simulationsmethoden umfasst: eine Punktquellensynthese, eine Finite-Difference-Time-Domain-Methode, eine Finite-Elemente-Methode, eine Finite-Integrations-Technik.

Wie bereits ausgeführt, gehört zu der Erfindung auch eine Untersuchungsvorrichtung zur Inspektion eines Bauteils. Die Untersuchungsvorrichtung weist die beschriebene Messeinrichtung zum Durchführen einer Ultraschallmessung an dem Bauteil sowie eine Analyseeinrichtung auf. Die Analyseeinrichtung kann beispielsweise als eine Prozessoreinrichtung, wie beispielsweise ein Computer, oder als ein Programmmodul für eine solche Prozessoreinrichtung ausgestaltet sein.

Die Analyseeinrichtung ist dazu ausgelegt, in Abhängigkeit von Ultraschallmessdaten der Messeinrichtung mittels einer Rekonstruktionsmethode eine Anzahl und eine jeweilige Position von mindestens einem inneren Strukturelement des Bauteils, also beispielsweise einem jeweiligen Defekt oder beispielsweise auch einer Grenze, Übergangsfläche zwischen zwei Elementen des Bauteils, zu ermitteln. Die Analyseeinrichtung weist des Weiteren einen Simulator auf, mittels welchem anhand eines jeweiligen Modells für das mindestens eine Strukturelement mindestens eine Beschaffenheit und/oder präzisierte Position jedes Strukturelements ermittelt wird, indem die Ultraschallmessung simuliert wird und auf der Grundlage der Simulationswerte jedes Modell in Abhängigkeit von den Ultraschallmesswerten angepasst wird. Hierdurch stehen schließlich Modelle für die Strukturelemente bereit, von denen jedes die Beschaffenheit eines der Strukturelemente beschreibt.

Die Untersuchungsvorrichtung kann in derselben Weise weitergebildet werden, wie es im Zusammenhang mit dem erfindungsgemäßen Verfahren bereits beschrieben worden ist. Aus diesem Grund werden die entsprechenden Weiterbildungen der erfindungsgemäßen Untersuchungsvorrichtung hier nicht noch einmal beschrieben.

Im Folgenden ist ein Ausführungsbeispiel der Erfindung beschrieben. Hierzu zeigt:
- FIG 1: eine schematische Darstellung einer Ausführungsform der erfindungsgemäßen Untersuchungsvorrichtung,
- FIG 2: ein Flussdiagramm, welches einen Ablauf einer Ausführungsform des erfindungsgemäßen Verfahrens beschreibt, wie sie durch die Untersuchungsvorrichtung von FIG 1 durchgeführt werden kann, und
- FIG 3: ein Flussdiagramm zu einem Verfahrensschritt des Verfahrens von FIG 2.

Bei dem im Folgenden erläuterten Ausführungsbeispiel handelt es sich um eine bevorzugte Ausführungsform der Erfindung. Bei dem Ausführungsbeispiel stellen aber die beschriebenen Komponenten der Ausführungsform jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren ist die beschriebene Ausführungsform auch durch weitere der bereits beschriebenen Merkmale der Erfindung ergänzbar.

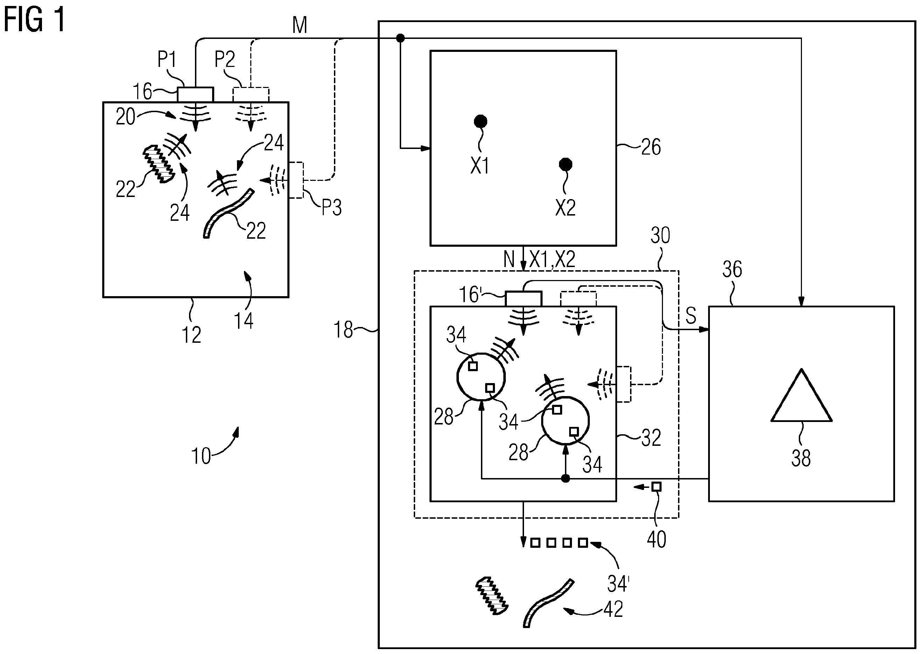

In FIG 1 ist eine Untersuchungsvorrichtung 10 dargestellt, mit welcher bei einem Bauteil 12 dessen innere Struktur 14 nicht-invasiv oder zerstörungsfrei untersucht werden kann. Die Untersuchungsvorrichtung 10 kann eine Ultraschall-Messeinrichtung oder kurz Messeinrichtung 16 und eine Analyseeinrichtung 18 aufweisen.

Die Messeinrichtung 16 kann in an sich bekannter Weise ausgestaltet sein und dazu ausgelegt sein, ein Ultraschallsignal oder Ultraschall 20 in das Bauteil 12 auszustrahlen oder auszusenden. Die Messeinrichtung kann auch eine separate Ultraschallsende- und Empfangseinheit aufweisen. Durch Strukturelemente 22, die sich im Inneren des Bauteils 12 befinden können und die innere Struktur 14 darstellen, kann an den Strukturelementen 22 Ultraschall reflektiert oder gestreut werden, das heißt Echos 24 des Ultraschalls 20 entstehen. Die Messeinrichtung 16 kann dazu ausgelegt sein, die Echos 24 zu erfassen und zu den erfassten Echos 24 Ultraschallmesswerte oder kurz Messwerte M in an sich bekannter Weise zu erzeugen. Die Messeinrichtung 16 ist in FIG 1 an einer ersten Messposition P1 an dem Bauteil 12 angeordnet. Die Messeinrichtung kann zum Erzeugen der Messwerte M auch an mehreren unterschiedlichen Stellen P2, P3 und weiteren, nicht veranschaulichten Positionen an dem Bauteil 12 angeordnet werden.

Die Messwerte M können an die Analyseeinrichtung 18 übertragen werden, beispielsweise über eine Datenleitung oder auch beispielsweise durch Transportieren der Messwerte M mittels eines portablen Datenträgers.

Bei den Strukturelementen 22 kann es sich beispielsweise jeweils um einen Einschluss, einen Haarriss oder eine Korrosionsstelle oder einen anderen Defekt im Bauteil 12 oder allgemein ein Streuzentrum oder eine Reflexionsfläche für den Ultraschall 20 handeln.

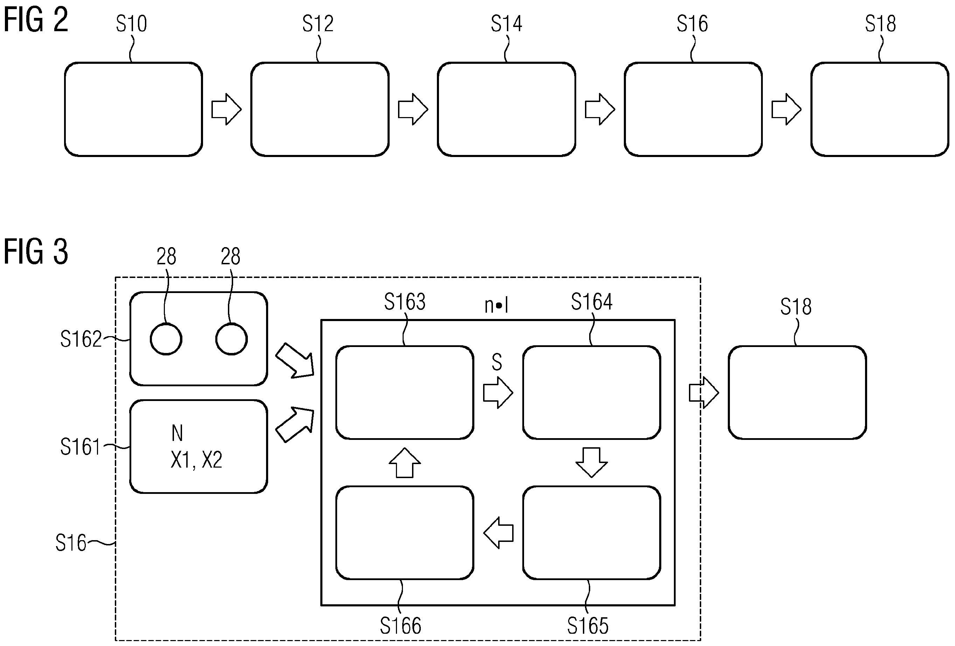

Mittels der Analyseeinrichtung 18 kann zu jedem Strukturelement 22 eine Beschaffenheit ermittelt werden, beispielsweise die Größe des Strukturelements 22 oder auch eine oder mehrere der anderen, bereits beschriebenen Beschaffenheiten. Hierzu wird in der Analyseeinrichtung 18 auf der Grundlage der Messwerte M das im Folgenden anhand von FIG 2 und FIG 3 beschriebene Verfahren durchgeführt.

Gemäß FIG 2 wird im Zuge der Bauteilinspektion mit Ultraschall, das heißt mit der Erzeugung der Messwerte M in dem Messschritt S10, mittels eines bildgebenden Verfahrens im Schritt S12 eine Rekonstruktion 26 der inneren Struktur 14, also ein Abbild der inneren Struktur 14, erzeugt. Beispielsweise kann die Rekonstruktion 26 mit Hilfe einer Synthetic Aperture Focusing Technique (SAFT) rekonstruiert werden. Aus den Rekonstruktionsdaten der Rekonstruktion 26 können in einem Schritt S14 eine Anzahl N (in dem Beispiel ist N=2) und eine Position X1, X2 von jedem in der Rekonstruktion 26 erkennbaren Strukturelement 22 ermittelt werden, insbesondere soweit sie in der Rekonstruktion eine Signalidentität aufweisen, die um einen vorbestimmten Signal-zu-Rausch-Abstand über einem Rauschniveau liegen.

Diese ermittelten Positionen X1, X2 können Startparameter für eine in Schritt S16 durchzuführende Simulation bilden. Neben der beschriebenen Position X1, X2 für jedes Strukturelement können in Abhängigkeit von der entsprechenden Eignung der verwendeten Rekonstruktion 26 auch weitere Startparameter extrahiert werden.

In dem Schritt S16 werden weitere Beschaffenheitswerte, das heißt z.B. Defektparameter, der Strukturelemente 22 durch ein Inverses Verfahren bestimmt, indem die erfassten Messwerte M durch einen simulierten Datensatz aus Simulationswerten S approximiert werden. Invers bedeutet hier, dass die Messwerte M rekonstruiert werden sollen.

Der Betrieb des Simulators 30 ist in FIG 3 veranschaulicht. Ausgangspunkt für sowohl die Anzahl N als auch eine erste geschätzte Position X1, X2 der modellierten Defekte, das heißt von jeweiligen Modellen 28 der Strukturelemente 22, können die Ergebnisse des vorhergehenden Schrittes in einem Initialisierungsschritt S161 sein. Die Wahl des Modells 28 kann in einem Schritt S162 in Abhängigkeit von der beispielsweise aufgrund des Herstellungsprozesses beziehungsweise der Belastung des Bauteils 12 zu erwartenden Art der Strukturelemente, beispielsweise des zu erwartenden Defektes, und der verwendeten Inspektionsmodalität, das heißt der Eigenschaften der Messeinrichtung 16, gewählt werden.

Die Defektgeometrie oder allgemein Strukturgeometrie kann durch ein vereinfachtes Modell, wie beispielsweise eine Kreisscheibe, Kugel oder ein Ellipsoid, beschrieben werden, um die Anzahl der Freiheitsgrade bei der Optimierung zu reduzieren und somit ein Konvergieren des Optimierungsprozesses zu erleichtern. In FIG 1 ist veranschaulicht, wie hierbei in einer ersten Simulation als Modelle 28 jeweils ein Kugelmodell für jedes Strukturelement 22 in einem Simulationsmodell 32 des Bauteils 12 vorgesehen wird. Jedes Modell 28 weist aber einstellbare Parameter 34 auf, welche beispielsweise eine Form des durch das Modell 28 modellierten Strukturelements und eine räumliche Orientierung im Simulationsmodell 28 beschreiben können.

Die gewählten Modelle 28 werden in einem Simulator 30 gemäß der ermittelten Position X1, X2 in das Simulationsmodell 32 integriert oder positioniert, und durch den Simulator 30 wird die Ultraschallmessung simuliert, das heißt es wird simuliert, wie eine virtuelle Messeinrichtung 16', welche die Eigenschaften der Messeinrichtung 16 aufweisen kann, in der beschriebenen Weise Ultraschall in das Bauteil 12 aussendet und aus diesem empfängt. Das Bauteil 12 ist im Simulator 30 das Simulationsmodell 32.

Durch die Simulation werden hierdurch Simulationswerte S in an sich bekannter Weise erzeugt. Mittels des Simulators 30 und einer Optimierungseinheit 36 kann nun eine iterative Optimierung der Modellparameter 34 durchgeführt werden mit dem Ziel, eine Differenz 38 (in dem Bild durch ein Delta veranschaulicht) zwischen den Messwerten M und den Simulationswerten S zu minimieren. Hierzu erzeugt die Optimierungseinheit 36 Update-Werte 40 für die Modellparameter 34, sodass mit den veränderten Parameterwerten 34 erneut eine Simulation durchgeführt werden kann.

In einer konkreten Implementierung des Simulators 30 kann die Simulation beispielsweise in Punktquellensynthese und die Optimierung mit Hilfe einer iterativen regularisierten Gauß-Newton-Methode durchgeführt werden. Prinzipiell können aber beliebige Simulations- und Optimierungsverfahren angewendet werden. Das Zielfunktional zur Bestimmung der Differenz 38 kann im einfachsten Fall aus der Quadratsumme der Abweichung zwischen Simulation und Messung bestehen. Die Modellparameter 34 können mehrmals modifiziert werden, das heißt es können n Iterationen I durchgeführt werden, bis die Übereinstimmung von Simulation und Messung gemäß einem vorbestimmten Optimierungskriterium hinreichend ist. Hierzu wird also im Rahmen mehrerer Iterationen nI in einem Simulationsschritt S163 die Simulation durchgeführt, was zu aktuellen Simulationswerten S führt, in einem Vergleichsschritt 164 das Zielfunktional ermittelt, also die Differenz 38, in einem Optimierungsschritt S165 die lokale Ableitung der Fehlerfunktion, die zur Berechnung der Differenz 38 verwendet wurde, quantifiziert und hieraus in einem Optimierungsschritt S166 das Parameterupdate durchgeführt, also die Update-Werte 40 in die Modellparameter 34 der Modelle 28 eingetragen.

Wenn dann nach n Iterationen das Optimierungskriterium erfüllt ist, können die Werte der Modellparameter 34 in einem Schritt S18 ausgelesen werden. Diese ausgelesenen Endparameter 34' können die quantifizierten Defekte beschreiben. Mit anderen Worten können die Endparameter 34' aus den Modellen 28 ausgelesen werden und hieraus Beschreibungen 42 der quantifizierten Strukturelemente gebildet werden, die beispielsweise einem Benutzer auf einer Anzeigeeinrichtung dargestellt werden können.

Anstelle der genannten Methoden können im Rahmen der einzelnen Verfahrensschritte S12 bis S16 auch folgende Methoden verwendet werden:
Verfahrensschritt S12:
   SAFT, Diffraction Tomography, Deconvolution Imaging, Total Focusing Method.
Verfahrensschritt S14:
   Bestimmung lokaler Maxima, Entfaltung.
Verfahrensschritt S16:
   Simulationsverfahren: Punktquellensynthese, Finite Difference Time Domain, Finite Elemente;
   und als Optimierungsverfahren: Regularisiertes Gauß-Newton-Verfahren, Verfahren der konjugierten Gradienten.

Die genannten Ausführungsformen sind aber nur beispielhaft zu verstehen.

Insbesondere ist die beschriebene Kombination von bildgebenden Verfahren mit einer Inversen Methode auf Grundlage einer Simulation vorgesehen. Im Speziellen werden durch die Verwendung einer SAFT Anfangsparameter für die Simulation ermittelt und dann in der Simulation mittels einer Punktquellensynthese mit iterativ regularisierter Gauß-Newton-Optimierung Defektparameter ermittelt. Das erfindungsgemäße Verfahren sieht dabei insbesondere die Ultraschallprüfung von Radscheiben und - wellen vor, wie sie beispielsweise in Turbinen, Generatoren oder allgemein hochbelasteten Stahlerzeugnissen verwendet werden.

Das Verfahren kann aber beispielsweise auch im Rahmen einer Ultraschalluntersuchung eines Körpers verwendet werden. Als Bauteil ist hierbei dann der untersuchte Körper der Person oder des Tieres anzusehen.

Durch die beschriebene Kombination aus bildgebenden Verfahren und Simulationsmethode können benachbarte Strukturelemente oder Defekte, deren Streusignale sich bei konventionellen Methoden gegenseitig beeinflussen und somit falsch bewertet werden, korrekt quantifiziert werden. Voraussetzung ist hierbei lediglich, dass in dem Schritt S12 mit dem angewendeten bildgebenden Verfahren zwei Strukturelemente noch als getrennte Elemente aufgelöst werden können. Durch Verwendung einer geeigneten Simulationsmethode ermöglicht das vorgeschlagene Verfahren es auch, Mehrfachstreuung, das heißt die Wechselwirkung benachbarter Defekte, bei der Defektbewertung zu berücksichtigen. Bei konventioneller Größenbewertung von Strukturelementen oder Defekten muss jedes A-Bild, das heißt das Signal an einer Messposition, separat ausgewertet werden. Im Vergleich dazu fließen bei dem vorgeschlagenen Verfahren alle Positionen in die Bewertung mit ein, aus denen die Defektposition angeschallt wird. Dadurch werden mehr Informationen berücksichtigt und das Gefügerauschen sowie Störsignale verringert, unterdrückt oder kompensiert.

Durch Berücksichtigen mehrerer Messpositionen P1, P2, P3 verbessert sich auch der Signal-Rausch-Abstand der Bewertung, was den Nachweis und Bewertung auch besonders kleiner Defekte ermöglicht.

Inspektionsergebnisse werden üblicherweise nicht als Bild dokumentiert, sondern in Form einer sogenannten Anzeigentabelle mit Beschreibung der Anzeigen. Dieser Schritt kann in Form der ermittelten Endparameter 34' der Strukturelementen 22 selbsttätig durch die Analyseeinrichtung 18 durchgeführt werden.

In dem bildgebenden Verfahren können neben potentiellen Defekten viele andere Faktoren einen Einfluss auf das Ergebnis haben. Beispiele hierfür sind Prüffrequenz, Schallfeldcharakteristik und Signalformen. Die Bestimmung der relevanten Inspektionsdaten wie Defektgröße und Form sind deshalb oft nicht trivial. Das vorgeschlagene Verfahren kann derartige Einflüsse bei der Simulation durch ein entsprechendes Simulationsmodell berücksichtigen und/oder korrigieren. Weiterhin können auch Defektparameter, das heißt die Modellparameter 34, wie beispielsweise die Defektorientierung, bestimmt werden, die aus einem Rekonstruktionsbild 26 oder den Rohdaten, das heißt den Messdaten M, nicht direkt ersichtlich sind. Bekannte Einflussfaktoren, wie beispielsweise die Bauteilform oder Anisotropie, können im Rahmen der Simulation durch entsprechende Wahl des Simulationsmodells 32 berücksichtigt werden.

Insgesamt zeigt das Beispiel, wie durch die Erfindung eine modellbasierte Ultraschall-Defektbewertung realisiert werden kann.

## Patentansprüche

1. Verfahren zum Untersuchen eines Bauteils (12), mit den Schritten:
- Durchführen einer Ultraschallinspektion durch Aussenden von Ultraschall (20) in das Bauteil (12) und Erfassen von Ultraschallmesswerten (M) an dem Bauteil (12),
- in Abhängigkeit von den Ultraschallmesswerten (M) Erzeugen einer bildgebenden Rekonstruktion (26) einer inneren Struktur (14) des Bauteils (12) mittels einer vorbestimmten Rekonstruktionsmethode,
- in der Rekonstruktion (26) Ermitteln einer Anzahl (N) und einer jeweiligen Position (X1, X2) mindestens eines Strukturelements (22) der inneren Struktur (14), wobei jedes Strukturelement jeweils eine Inhomogenität in einem Material des Bauteils (12) darstellt,
- gemäß der jeweiligen Position (X1, X2) Positionieren eines jeweiligen Modells (28) jedes Strukturelements (22) in einem Simulationsmodell (32) des Bauteils (12), wobei jedes Modell (28) mindestens einen einstellbaren Modellparameter (34) umfasst, der eine Beschaffenheit des jeweiligen Strukturelements (22) beschreibt,
- mittels des Simulationsmodells (32) Simulieren der Ultraschallinspektion und hierdurch Erzeugen von Simulationswerten (S), wobei Simulationswerte diejenigen Ultraschallmesswerte beschreiben, die sich ergeben müssten, wenn in dem Bauteil tatsächlich Strukturelemente enthalten wären, welche die Beschaffenheit aufweisen, wie sie durch jedes Modell angegeben ist,
- Ermitteln eines Unterschieds (38) zwischen den Simulationswerten (S) und den Ultraschallmesswerten (M),
- in Abhängigkeit von dem Unterschied (38) Verändern jedes Modellparameters (34) gemäß einer zur Verminderung des Unterschieds ausgelegten Optimierungsvorschrift.

2. Verfahren nach Anspruch 1, wobei bei einem oder mehr als einem oder jedem Modell (28) der mindestens eine Modellparameter (34) umfasst: eine Form des modellierten Strukturelements (22), ein Reflexionsmaß, ein Dämpfungsmaß, eine Ausrichtung oder Orientierung im Bauteil (12), eine Position (X1, X2) im Bauteil (12).

3. Verfahren nach einem der vorhergehenden Ansprüche, wobei bei einem oder mehr als einem oder jedem Modell (28) ein maximales Abmaß des Strukturelements (22) kleiner als eine doppelte Wellenlänge des Ultraschalls (20), insbesondere kleiner als das 1,5-fache der Wellenlänge, ist.

4. Verfahren nach einem der vorhergehenden Ansprüche, wobei die Rekonstruktionsmethode mindestens eine der folgenden Methoden umfasst: Synthetic Aperture Focusing Technique, Deconvolution Imaging, Total Focusing Method.

5. Verfahren nach einem der vorhergehenden Ansprüche, wobei das Ermitteln der jeweiligen Position (X1, X2) ein Orten eines lokalen Maximums und/oder eine Entfaltung umfasst.

6. Verfahren nach einem der vorhergehenden Ansprüche, wobei die Simulation zumindest eine der folgenden Simulationsmethoden umfasst: Punktquellensynthese, Finite-Difference-Time-Domain-Methode, Finite-Elemente-Methode, Finite-Integrations-Technik.

7. Verfahren nach einem der vorhergehenden Ansprüche, wobei das Ermitteln des Unterschieds (38) das Berechnen einer Quadratsumme von Differenzen zwischen jeweils einem Simulationswert (S) und einem durch diesen simulierten Ultraschallmesswert (M) umfasst.

8. Verfahren nach einem der vorhergehenden Ansprüche, wobei die Optimierungsvorschrift zumindest eine aus den folgenden Methoden umfasst: Gradientenabstiegsmethode, Gauß-Newton-Methode, Monte-Carlo-Methode, Parameterstudien.

9. Verfahren nach einem der vorhergehenden Ansprüche, wobei das Simulieren der Ultraschallmessung und das Verändern jedes Modellparameters (34) iterativ sooft durchgeführt wird, bis der ermittelte Unterschied (38) ein vorbestimmtes Optimierungskriterium erfüllt.

10. Verfahren nach einem der vorhergehenden Ansprüche, wobei ein Modelltyp jedes Modells (28) in Abhängigkeit von einer Eigenschaft des Bauteils (12) festgelegt wird.

11. Untersuchungsvorrichtung (10) zum Untersuchen eines Bauteils (12), wobei die Untersuchungsvorrichtung (10) eine Messeinrichtung (16) zum Durchführen einer Ultraschallmessung an dem Bauteil (12) und eine Analyseeinrichtung (18) aufweist,
**dadurch gekennzeichnet, dass**
die Analyseeinrichtung (18) dazu ausgelegt ist, ein Verfahren nach einem der vorherigen Ansprüche durchzuführen und hierdurch in Abhängigkeit von Ultraschallmessdaten (M) der Messeinrichtung (16) mittels einer Rekonstruktionsmethode eine Anzahl (N) und eine jeweilige Position (X1, X2) von mindestens einem inneren Strukturelement (22) des Bauteils (12) zu ermitteln und mittels eines Simulators (30) in Abhängigkeit von jeder ermittelten Position (X1, X2) anhand eines jeweiligen Modells (28) für das mindestens eine Strukturelement (22) mindestens eine Beschaffenheit jedes Strukturelements (22) durch Simulieren der Ultraschallmessung und Anpassen jedes Modells (28) in Abhängigkeit von den Ultraschallmesswerten (M) zu ermitteln.

## Claims

1. Method for examining a component (12), comprising the steps:
- carrying out an ultrasound inspection by emitting ultrasound (20) into the component (12) and recording ultrasound measurement values (M) from the component (12),
- as a function of the ultrasound measurement values (M), generating an imaging reconstruction (26) of an internal structure (14) of the component (12) by means of a predetermined reconstruction method,
- in the reconstruction (26), determining a number (N) and a respective position (X1, X2) of at least one structural element (22) of the internal structure (14), wherein each structural element constitutes in each case an inhomogeneity in a material of the component (12),
- according to the respective position (X1, X2), positioning a respective model (28) of each structural element (22) in a simulation model (32) of the component (12), each model (28) comprising at least one adjustable model parameter (34) which describes a characteristic of the respective structural element (22)
- by means of the simulation model (32), simulating the ultrasound inspection and thereby generating simulation values (S), wherein simulation values describe those ultrasound measurement values which would have to have occurred if structural elements that have the characteristic as specified by each model were actually present in the component,
- determining a difference (38) between the simulation values (S) and the ultrasound measurement values (M),
- as a function of the difference (38), modifying each model parameter (34) according to an optimization rule designed to reduce the difference.

2. Method according to Claim 1, wherein, in one or more than one or each model (28), the at least one model parameter (34) comprises: a shape of the modeled structural element (22), a reflection factor, an attenuation factor, an alignment or orientation in the component (12), a position (X1, X2) in the component (12).

3. Method according to one of the preceding claims, wherein, in one or more than one or each model (28), a maximum dimension of the structural element (22) is less than a doubled wavelength of the ultrasound (20), in particular less than 1.5 times the wavelength.

4. Method according to one of the preceding claims, wherein the reconstruction method comprises at least one of the following methods: synthetic aperture focusing technique, deconvolution imaging, total focusing method.

5. Method according to one of the preceding claims, wherein determination of the respective position (X1, X2) comprises localization of a local maximum and/or a deconvolution.

6. Method according to one of the preceding claims, wherein the simulation comprises at least one of the following simulation methods: point source synthesis, finite difference time domain method, finite element method, finite integration technique.

7. Method according to one of the preceding claims, wherein the determination of the difference (38) comprises the calculation of a sum of squares of differences between respectively a simulation value (S) and an ultrasound measurement value (M) simulated by the latter.

8. Method according to one of the preceding claims, wherein the optimization rule comprises at least one of the following methods: gradient descent method, Gauss-Newton method, Monte Carlo method, parameter studies.

9. Method according to one of the preceding claims, wherein the simulation of the ultrasound measurement and the modification of each model parameter (34) are carried out iteratively until the difference (38) determined satisfies a predetermined optimization criterion.

10. Method according to one of the preceding claims, wherein a model type of each model (28) is established as a function of a property of the component (12).

11. Examination apparatus (10) for examining a component (12), the examination apparatus (10) comprising a measuring device (16) for carrying out an ultrasound measurement on the component (12) and an analysis device (18),
**characterized in that**
the analysis device (18) is configured in order to carry out a method according to one of the preceding claims and thereby to determine a number (N) and a respective position (X1, X2) of at least one internal structural element (22) of the component (12) as a function of ultrasound measurement data (M) of the measuring device (16) by means of a reconstruction method and to determine by means of a simulator (30) at least one characteristic of each structural element (22) as a function of each position (X1, X2) determined, with the aid of a respective model (28) for the at least one structural element (22), by simulating the ultrasound measurement and adapting each model (28) as a function of the ultrasound measurement values (M).

## Revendications

1. Procédé d'examen d'une pièce (12), comprenant les stades :
- on effectue une inspection par ultrasons en envoyant des ultrasons (20) dans la pièce (12) et on détecte des valeurs (M) de mesure d'ultrasons sur la pièce (12),
- en fonction des valeurs (M) de mesure d'ultrasons, on produit une reconstruction (26) donnant une image d'une structure (14) intérieure de la pièce (12), au moyen d'un procédé de reconstruction déterminé à l'avance,
- dans la reconstruction (26), on détermine un nombre (N) et une position (X1,X2) respective d'au moins un élément (22) de la structure (14) intérieure, chaque élément de structure représentant, respectivement, un défaut d'homogénéité du matériau de la pièce (12),
- suivant la position (X1, X2) respective, on met un modèle (28) respectif de chaque élément (22) de structure en position dans un modèle (32) de simulation de la pièce (12), chaque modèle (28) comprenant au moins un paramètre (34) de modèle réglable, qui décrit une qualité de l'élément (22) de structure respective,
- au moyen du modèle (32) de simulation, on simule l'inspection par ultrasons et on produit ainsi des valeurs (S) de simulation, des valeurs de simulation décrivant des valeurs de mesure par ultrasons, qui devraient se produire, s'il était contenu dans la pièce réellement des éléments de structure, qui ont la qualité telle qu'elle est indiquée par chaque modèle,
- on détermine une différence (38) entre les valeurs (S) de simulation et les valeurs (M) de mesure par ultrasons,
- en fonction de la différence (38), on modifie chaque paramètre (34) de modèle suivant une prescription d'optimisation conçue pour diminuer la différence.

2. Procédé suivant la revendication 1, dans lequel, dans un ou dans plus d'un ou dans chaque modèle (28), le au moins un paramètre (34) de modèle comprend : une forme de l'élément (22) de structure modélisé, une grandeur de réflexion, une grandeur d'amortissement, une direction ou une orientation dans la pièce (12), une position (X1, X2) dans la pièce (12).

3. Procédé suivant l'une des revendications précédentes, dans lequel, pour un ou pour plus d'un ou pour chaque modèle (28), une dimension maximum de l'élément (22) de structure est plus petite que le double de la longueur d'onde des ultrasons (20), notamment plus petite que 1,5 fois la longueur d'onde.

4. Procédé suivant l'une des revendications précédentes, dans lequel la méthode de reconstruction comprend au moins l'une des méthodes suivantes : technique synthetic aperture focusing, deconvolution, méthode imaging, total focusing.

5. Procédé suivant l'une des revendications précédentes, dans lequel la détermination de la position (X1, X2) respective comprend un emplacement d'un maximum local et/ou une déconvolution.

6. Procédé suivant l'une des revendications précédentes, dans lequel la simulation comprend au moins l'une des méthodes de simulation suivantes : synthèse à source de point, méthode finite-difference-time-domain, méthode aux élément finis, technique d'intégration finie.

7. Procédé suivant l'une des revendications précédentes, dans lequel la détermination de la différence (38) comprend le calcul d'une somme de carrés de différence entre, respectivement, une valeur (S) de simulation et une valeur (M) de mesure par ultrasons simulée par celle-ci.

8. Procédé suivant l'une des revendications précédentes, dans lequel la prescription d'optimisation comprend au moins l'une des méthodes suivantes : méthode de descente de gradients, méthode de Gauß-Newton, méthode de Monte-Carlo, études de paramètres.

9. Procédé suivant l'une des revendications précédentes, dans lequel on effectue la simulation de la mesure par ultrasons et la modification de chaque paramètre (34) de modèle, itérativement, jusqu'à ce que la différence ((38) déterminée satisfasse un critère d'optimisation défini à l'avance.

10. Procédé suivant l'une des revendications précédentes, dans lequel on fixe un type de chaque modèle (28) en fonction d'une propriété de la pièce (12).

11. Système (10) d'examen pour examiner une pièce (12), le système (10) d'examen ayant un dispositif (16) de mesure, pour effectuer une mesure par ultrasons sur la pièce (12), et un dispositif (18) d'analyse,
**caractérisé en ce que**
le dispositif (18) d'analyse est conçu pour effectuer un procédé suivant l'une des revendications précédentes et en déterminer, en fonction de données (M) de mesure par ultrasons du dispositif (16) de mesure, au moyen d'une méthode de reconstruction, un nombre (N) et une position (X1, X2) respective d'au moins un élément (22) de structure intérieure de la pièce (12) et pour, au moyen d'un simulateur (30), déterminer, à l'aide d'un modèle (28) respectif pour le au moins un élément (22) de structure, au moins une qualité de chaque élément (22) de structure par simulation de la mesure par ultrasons et adaptation de chaque modèle (28) en fonction des valeurs (M) de mesure par ultrasons.
